# EUROPEAN PATENT SPECIFICATION

(11) **EP 1 541 279 B1**
(45) Date of publication and mention of the grant of the patent: **08.10.2008**
(21) Application number: 03733065.1
(22) Date of filing: 26.05.2003
(51) Int. Cl.: B23Q 11/10

(54) **MIST FEEDING MECHANISM OF ROTARY TOOL**
NEBELZUFÜHRUNGSMECHANISMUS EINES DREHWERKZEUGS
MECANISME SERVANT A BRUMISER UN OUTIL ROTATIF

(30) Priority: 05.09.2002 JP 2002260352
(43) Date of publication of application: 15.06.2005
(73) Proprietor: KANEFUSA KABUSHIKI KAISHA, Niwa-gun, Aichi 480-0192 (JP)
(72) Inventor: IDE, Tsuyoshi, Niwa-gun, Aichi 480-0192 (JP)
(74) Representative: Modiano, Micaela Nadia
(86) International application number: PCT/JP2003/006553
(87) International publication number: WO 2004/022282

(56) References cited:
- EP-A- 0 015 769
- JP-A- 11 267 943
- JP-A- 57 173 418
- US-A- 2 378 070
- US-A- 4 870 946
- US-B2- 6 371 100

## Description

### Field of the Invention

The present invention relates to a mist supply mechanism for a rotary tool and, more particularly, to a mist supply mechanism configured to supply a mist under pressure to a rotary tool provided at rotating shaft such as a circular saw, so as to allow cooling and/or lubricating of the rotary tool during workpiece-machining.

### Prior Art

A rotary tool represented by for example a circular saw is attached to the main shaft of a machining device such as a circular sawing machine, etc., to be used under high-speed rotation. This rotary tool has a problem of decreasing the durability of the rotary tool due to the heat generated from the friction occurred, during the machining of various workpieces, between the tool and the workpieces. In addition, the problems are also pointed out that a finish of the machined surface in the workpiece is deteriorated; further, it requires a long time for machining; and a noise is increased.

As a means for preventing or controlling the heating of the rotary tool leading to high temperature in such manner during workpiece-machining, it is widely known to implement cooling and lubricating together by successively supply cutting oil to an area to be machined during the machining of metal, stone, or the like. For example, a machining device is known wherein a machining passage 29 extending in the central axial direction thereof is perforated in a rotating shaft 11 with a metal saw 19 attached; a machining fluid is introduced to the machining passage 29 from an external machining fluid supply source 27 through an annular machining-fluid passage 25 and a plurality of communication passages 31; and the machining fluid is gushed from a machining fluid jet 33 perforated on the machining passage 29 and opened on a base of each metal saw 19, so that cooling and lubricating of the metal saw 19 are implemented (see Japanese Unexamined Patent Publication No. 2001-334408, page 1, Figs.. 1 and 2 ... hereinafter, referred to as "Patent Reference 1.") European Patent no. 0 015 769 A discloses a circular diamond saw comprising two discs spaced apart at their peripheries by diamond impregnated cutting segments and at their hub portions by an annular rib placed around a shaft. The rib is provided with a series of radial passages which connect with axial passages leading from an annular groove in the drive flange.

### Problem to be solved by the Invention

The aforementioned technique of supplying machining oil to an area to be machined on a workpiece causes no problem in a case where the workpiece is metal or stone. However, in a case where the workpiece is made of relatively soft material such as wood, there exist problems in that oil spreads thereto, which is troublesome, due to the supply of coolant oil, and it cannot be helped to avoid employing it since it also becomes the cause of pollution. Thus, by forcibly transferring machining oil with pressure air to form fine mist, and the mist is supplied to the metal base section of a circular saw during machining of wood, thereby allowing cooling and lubricating of the metal base section with less amount of mist to be used, so that the aforementioned disadvantage over the workpiece of wood can also be effectively controlled.

It seems that as a mechanism for supplying the mist to a rotary tool such as a circular saw etc., based on the structure described in the aforementioned Patent Reference 1, a small modification is given to achieve sufficient utility. However, the machining device disclosed in Patent Reference 1 is designed to perforate a passage port at the center of the rotating shaft extended in the axial direction, and to make this passage port to function as a main supply passage for coolant oil. Thus, in the aforementioned structure wherein a supply passage is perforated for cooling/lubricating medium in the rotating shaft in the machining device, when providing cooling/lubricating function for a rotating shaft in a machining device in operation already installed in a plant etc., not in a newly manufactured machining device, the replacement of this rotating shaft must be initiated first, which constitutes a drawback of installing cost increase. In addition, even in a machining device with a rotating shaft to which a supply passage for cooling/lubricating medium is attached, a drawback is also pointed out that, when the inside diameter of the rotary tool to be mounted on the machining device is not coincident with the outside diameter of the rotating shaft, it becomes impossible to mount the rotary tool thereon, so that many of various commercially available rotary tools cannot be used.

### Object of the Invention

The present invention is proposed in order to suitably solve the aforementioned drawbacks which exists in a cooling/lubricating mechanism of the conventional rotary tools, and aims to provide means which is designed to smoothly supply mist to a rotary tool in rotation, without involving a rotary shaft to which the rotary tool is attached, so as to easily add the cooling/lubricating mechanism to an already installed machining device and to achieve free selection/use of a rotary tool from various commercially available rotary tools having an inside diameter not coincident with the outside diameter of the rotating shaft.

### Means for solving the Problems

In order to overcome the above problems and achieve the preset object, the present invention comprises a mist supply mechanism according to claim 1.

### Brief description of the drawings

Fig. 1 is a longitudinal cross section of a mist supply mechanism for a rotary tool according to the preferred embodiment of the invention.
Fig. 2 is an enlarged cross section of a rotary seal section in the mechanism shown in fig. 1.
Fig. 3 is a transverse cross section taken along the line III - III of Fig. 2.
Fig. 4 is a longitudinal cross section of the rotary seal section shown in Fig. 2 with a sleeve and a rotating shaft being removed.
Fig. 5 is a transverse cross section taken along the line V - V of Fig. 4.
Fig. 6 is an enlarged perspective view of a main part of the mist supply mechanism according to the embodiment with a part being notched.
Fig. 7 is an enlarged view of a part surrounded by a dash-single-dot line of Fig. 1.
Fig. 8 is a longitudinal cross section of a mist supply mechanism according to another embodiment of the invention.
Fig. 9 is a longitudinal cross section of a mist supply mechanism according to yet another embodiment of the invention.

### Embodiment of the Invention

Next, a mist supply mechanism for a rotary tool of the invention is described hereinbelow referring to attached drawings and illustrating the preferred embodiment. Although the present embodiment illustrates a gang saw mainly for cutting wood wherein a multiplicity of circular saws are disposed in the axial direction of a rotating shaft at required intervals, it is as a matter of course not limited to this embodiment.

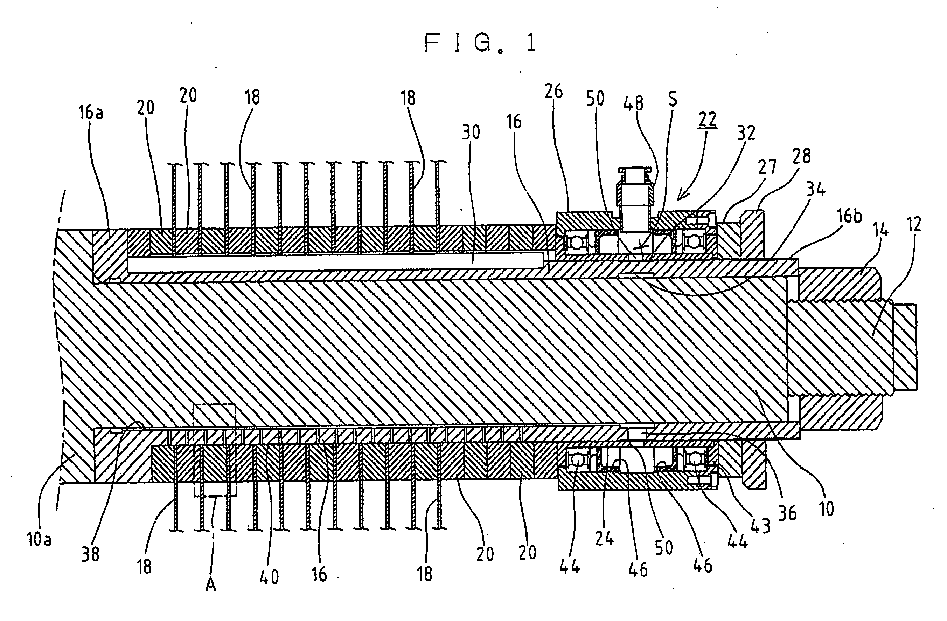

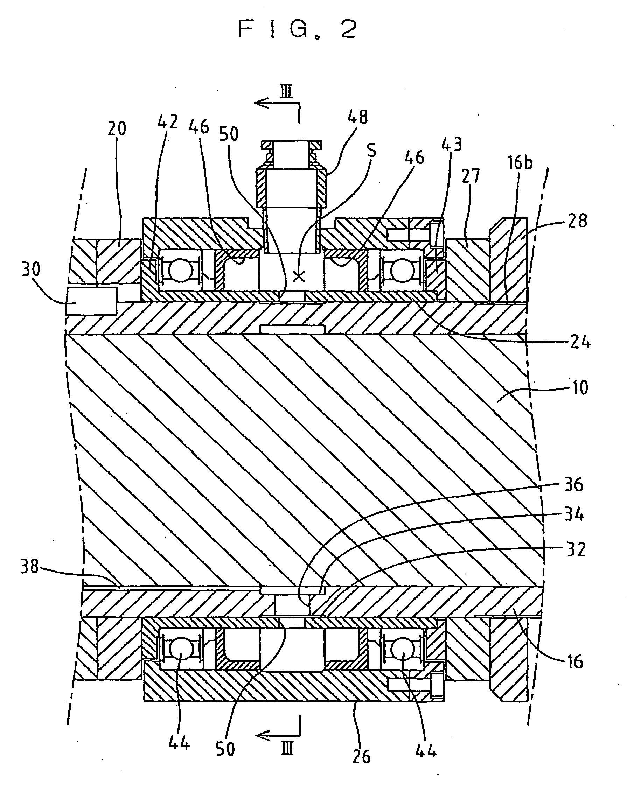

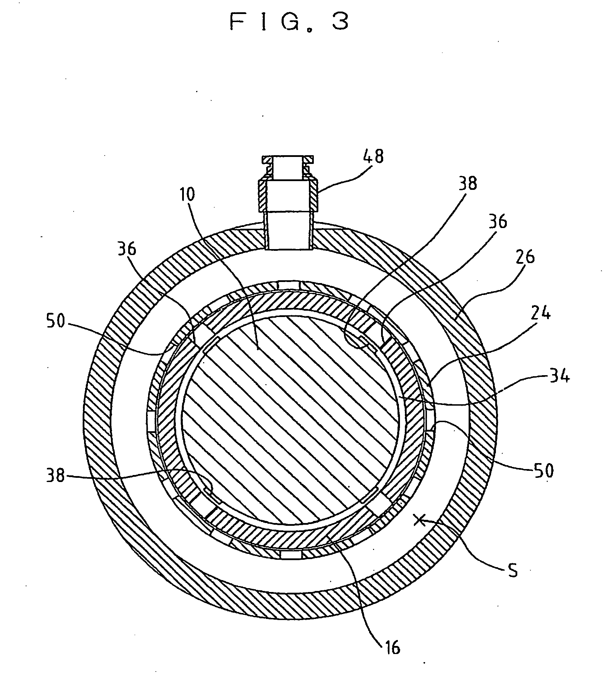

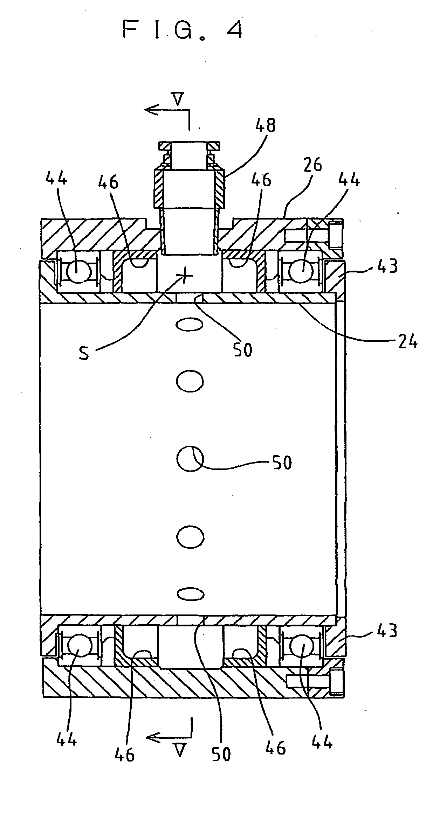

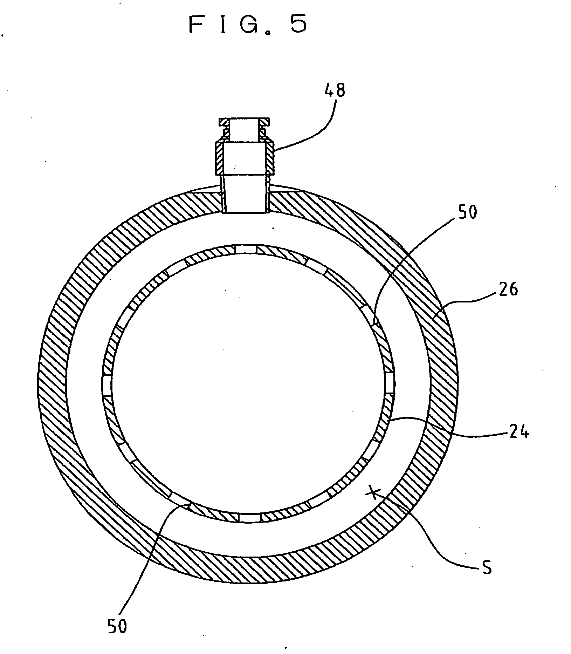

Fig, 1 is a longitudinal cross section of a mist supply mechanism according to the preferred embodiment of the invention; Fig. 2 is an enlarged cross section of a rotary seal section in the mechanism shown in fig. 1; and Fig. 3 is a transverse cross section taken along the line III - III of Fig. 2. Further, Fig. 4 is a longitudinal cross section of the rotary seal section shown in Fig. 2 with a sleeve and a rotating shaft being removed; and Fig. 5 is a transverse cross section taken along the line V - V of Fig. 4.

### (Regarding a sleeve)

In Fig. 1, symbol 10 denotes a rotating shaft extending horizontally, rotatably supported by a circular sawing machine not shown diagrammatically, wherein a bolt section 12 with its diameter being reduced is integrally provided with an open end (on the right side in the drawing) of the rotating shaft 10, and a nut 14 is designed to be screwed into the bolt section 12. A sleeve 16 having a required length circumferentially engages with the rotating shaft 10 in such a manner that the inside diameter of the sleeve 16 is approximately coincident with the outside diameter of the rotating shaft 10 in a close contact state to extend in the axial direction.

The sleeve 16 is configured as a hollow metal body in a cylindrical shape having a required thickness, and one end (on the left side in Fig. 1) of the sleeve 16 is integrally formed with a flange 16a with a required diameter. When the sleeve 16 circumferentially engages with the rotating shaft 10, the flange 16a abuts an enlarged step 10a of the rotating shaft 10 to be positioned to the left side. Further, the right open end of the sleeve 16 is positioned to the right side by the tightening of the nut 14 screwed into the bolt section 12. Thus, the rotating shaft 10 and the sleeve 16 can be integrally rotated by the drive of a rotary driving source not shown.

In Fig. 1, a required number of circular saws 18 and ring-like spacers 20 having required thickness are disposed alternately around the outer circumference of the sleeve 16, and the spacer 20 located at the most right side is positioned in the axial direction by a rotary seal section 22 engaging circumferentially and rotatably with the sleeve 16. The rotary seal section 22 is, as described later with reference to Figs. 2 and 4, basically configured from an inner rotary tubular body 24 and an outer fixed tubular body 26. The right side of the inner fixed tubular body 24 is tightened by a ring-like nut 28 screwed into a male screw 16b threaded on the right side of the outer circumference of the sleeve 16 through a ring-like spacer 27, so that the inner fixed tubular body 24 is positioned to the axial direction. Further, symbol 30 in Fig. 1 indicates a key disposed on the outer circumference of and along the longitudinal direction of the sleeve 16, and the key 30 allows the prevention of the rotation of the circular saws 18 and the spacers 20 in the radial direction.

As shown in Figs. 1, 2 and 6, at the area on the circumferential surface of the sleeve 16 and with which the rotary seal section 22 circumferentially engages in a corresponding manner, an outer circular groove 32 set to have a required width and depth are formed; and at the area on the inner circumference of the sleeve 16 and which corresponds to the outer circular groove 32, an inner circular groove 34 set to have a required width and depth is formed likewise. Further, as proved from Figs. 2 and 3, four passage ports 36 in total for providing communication between the outer circular groove 32 and the inner circular groove 34 are perforated through the sleeve 16 at the center angle of 90°. The passage port 36 is for supplying a mist coming from the rotary seal section 22 to a long groove 38 (described later) formed on the inner circumference of the sleeve 16, and the number of the perforation is not limited to four, as a matter of course.

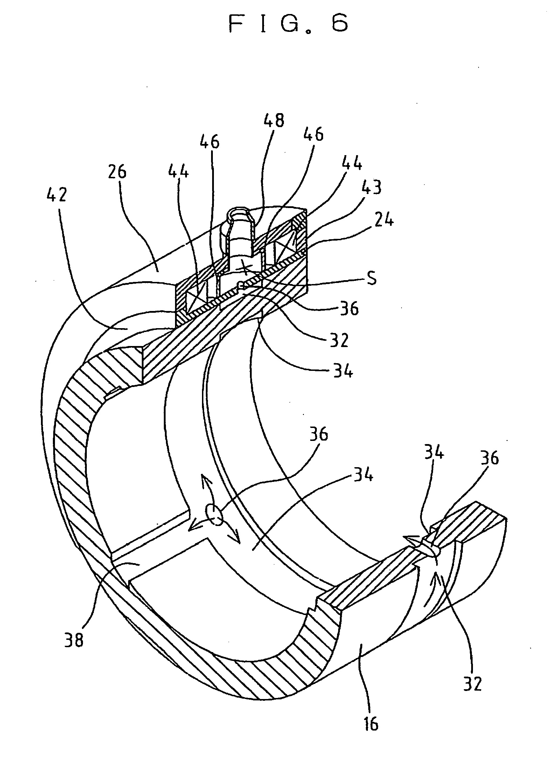

As shown in Figs. 6 and 3, on the inner circumference of the sleeve 16, four (in the illustrated drawings) long grooves 38 are formed and extending in the axial direction. That is, one end of the long groove 38 faces and provides communication with an area on the inner circular groove 34 and corresponding to an area to which the passage port 36 is perforated, and the other end, as shown in Fig. 1, terminates at an area positioned a little inside from the left end of the hollow section in the sleeve 16. Further, as shown in Fig. 3, four long grooves 38 in total are provided at the center angle of 90°, and the starting end thereof communicates in an open manner with the inner circular groove 34.

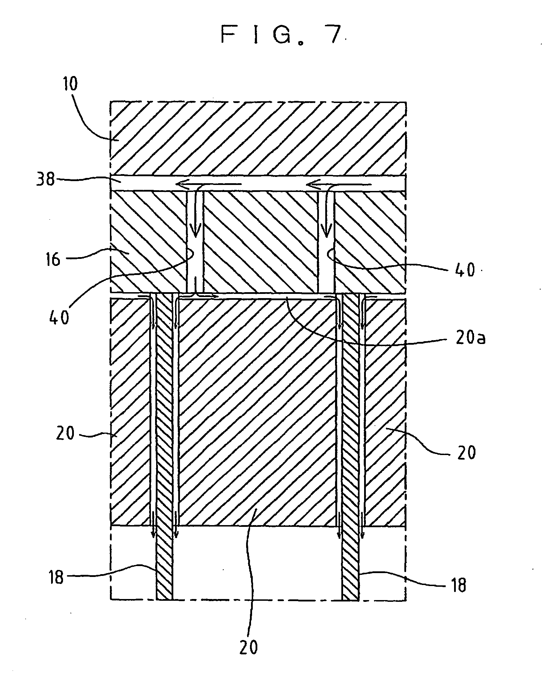

Moreover, on a position where the circular saws 18 and the spacers 20 are circumferentially engaged with the sleeve 16, mist supply ports 40 with a small diameter for providing communication between the circumferential surface of the sleeve 16 and the long groove 38 are perforated radially at predetermined intervals (see Fig. 1). The mist supply port 40 is designed, as shown in Fig. 7, to open to an area where the spacer is disposed. In addition, on the spacer 20, there is formed e.g., in a U-shaped or an L-shaped manner a mist circulation groove 20a for allowing a mist coming from the mist supply port 40 to flow to the side of the circular saw 18. Further, it is unnecessary to provide the mist circulation groove 20a for the spacer 20 not in contact with the circular saw 18.

### (Regarding rotary seal section)

The rotary seal section 22 fulfills a function of supplying a mist supplied by pressure from an external mist supply source not shown through a pipe to a metal base section of the circular saw 18 through a sleeve 16 rotating at high speed together with the rotating shaft 10. That is, the rotary seal section 22 is, as shown in Figs. 2, 4 and 6, basically configured from an inner rotary tubular body 24 with a flange 42 provided at one end and a ring-like lid 43 adhered to the other end, and an outer fixed tubular body 26 circumferentially engaged on the outer circumference of the inner rotary tubular body 24 through a circular bearing 44. The outer fixed tubular body 26 is attached to an outside fixing area by means not shown, so as to be unrotatable. Accordingly, the inner rotary tubular body 24 is designed to be freely rotatable with respect to the outer fixed tubular body 26 in the presence of the bearing 44. The inside diameter of the inner rotary tubular body 24 is set to be approximately coincident with the outside diameter of the sleeve 16, so that both member 16 and 24 can be rotated integrally by circumferentially engaging the inner rotary tubular body 24 with the sleeve 16, and subsequently tightening the ring-like nut 28 through the ring-like spacer 27.

As shown particularly in detail in Fig. 4, between the outer circumferential surface of the inner rotary tubular body 24 and the inner circumferential surface of the outer fixed tubular body 26, there is formed a circular void S with a required height surrounded on both sides by the bearings 44 and 44, and the circular void S is, further, internally defined by two circular seal bodies 46 and 46 on the right and left sides. In addition, as shown in Fig. 4, to the outer fixed tubular body 26, a nipple 48 is connected for communicating with the mist supply source through a pipe (any of which not shown), and the lower end of the nipple 48 opens to the circular void S. Furthermore, on the inner rotary tubular body 24, as shown in Fig. 4 likewise, twelve mist passing ports 50 are circumferentially perforated at required intervals (at the center angle of 30° in the embodiment of Fig. 5). Thus, a mist supplied under pressure from the mist supply source not shown comes to a circular void S defined between the outer fixed tubular body 26 and the inner rotary tubular body 24 through the nipple 48, and subsequently passes a multiplicity of mist passing ports 50 (twelve in number in the illustrated example) perforated circumferentially on the inner rotary tubular body 24.

Further, for a position where the rotary seal section 22 is provided on the sleeve 16, as shown in Figs. 2 and 3, a relative position is preselected where the multiplicity of mist passing ports 50 perforated circumferentially on the inner rotary tubular body 24 correspondingly face an outer circular groove 32 provided around the outer circumference of the sleeve 16. It will be understood that by adopting such position, a mist passing the mist passing port 50 is supplied, as shown by the arrows in Fig. 6, in the order of the outer circular groove 32 → passage port 36 → inner circular groove 34 → long groove 28 → mist supply port.

### (Function of the Embodiment)

Next, a function of a mist supply mechanism according to the embodiment is described. As has been previously described with regard to Fig. 1, around the outer circumference of the sleeve 16, circular saws 18 and spacers 20 are alternately engaged, and the spacer 20 located at the most right side is abutted against the left open end of a flange 42 of an inner rotary tubular body 24 constituting the rotary seal section 22. In addition, the rotary seal section 22 is tightened inwardly in the axial direction by a ring-like nut 28 screwed into a male screw 16b of the sleeve 16, so as to be rotatable integrally with the sleeve 16. Further, the sleeve 16 circumferentially engaging with a rotating shaft 10 is tightened by a nut 14 screwed into a bolt section 12 of the rotating shaft 10, so as to be fixed to the rotating shaft 10 to be rotatable integrally therewith.

An outer fixed tubular body 26 of the rotary seal section 22 is, as hereinbefore described, fixed unrotatably to an outside fixing area by means not shown. Thus, when rotating the rotating shaft 10, the sleeve 16 and the inner rotary tubular body 24 constituting the rotary seal section 22 rotate together with the rotating shaft 10. Further, a mist supply source produces a mist with pressure by, for example, mixing pressurized air with lubricating oil, and supplies the mist to a nipple 48 provided on the outer fixed tubular body 26 through a pipe (not shown).

As hereinbefore described, the mist thus supplied under pressure to the nipple 48 flows in the order of a circular void S → mist passing port 50 → outer circular groove 32 → passage port 36 → inner circular groove 34 → long groove 38 → mist supply port 40. As shown in Fig. 7, since a mist circulation groove 20a having a U-shape or an L-shape is concaved on the end surface of the spacer 20, the mist flowing to the outer circumference of the sleeve 16 from the mist supply port 40 passes through the mist circulation groove 20a having an L-shape to come to the metal base section of the circular saw 18. At this time, the circular saw 18 rotates together with the rotating shaft 10 at high speed, so that the mist is diffused in the radial direction of the circular saw 18 by centrifugal force, which cools the heat generated by friction between the workpiece and the circular saw 18 and efficiently achieve lubrication

### (Regarding another embodiment)

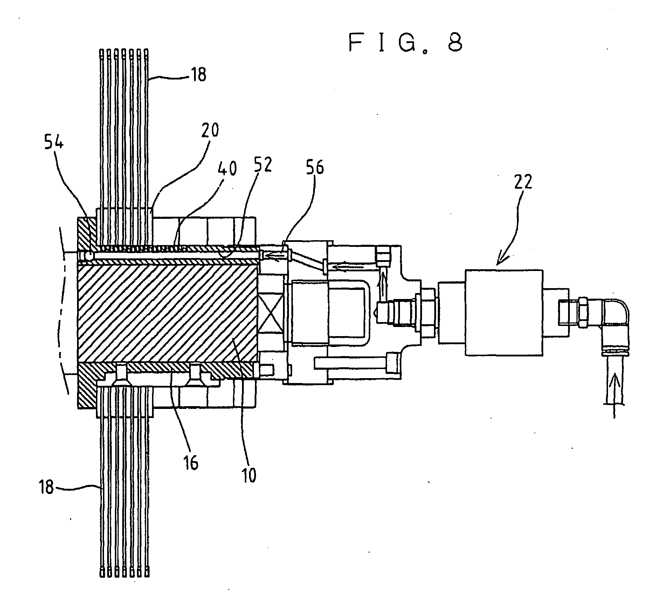

Fig. 8 is a longitudinal cross section showing another embodiment of the invention, wherein a long perforation 52 for mist supply extending in the axial direction is perforated on a sleeve 16, at its thick section, circumferentially engaging a rotating shaft 10 and rotating integrally therewith, and the left end of the long perforation 52 is closed by a plug 54. In addition, the right end of the long perforation 52 communicates with a mist supply passage 56 for communicating with a rotary seal section 22 provided on the right side of the rotating shaft 10. Further, on the long perforation 52, required numbers of mist supply ports 40 similar to those shown in Fig. 7 are perforated axially.

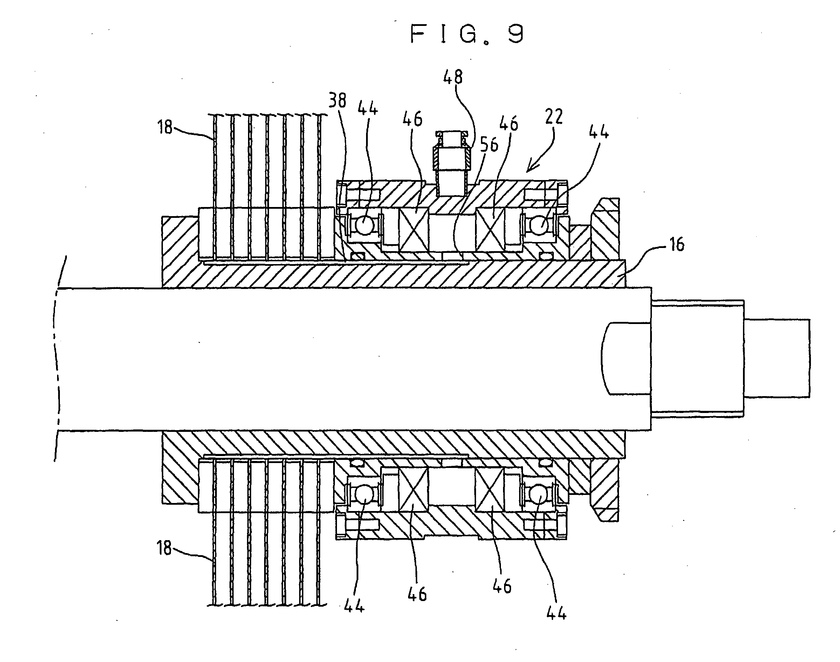

Fig. 9 is a longitudinal cross section showing yet another embodiment of the invention, and in this example, a long groove 38 extending in the longitudinal axial direction is formed on the outer circumferential surface of the sleeve 16. The long groove 38 communicates with the mist supply passage 56 of the rotary seal section 22 disposed on the outer circumference of the sleeve 16. Further, the long groove 38 also communicates with the mist circulation groove 20a provided on the spacer 20. In this case, it is sufficient that the mist circulation groove 20a is present only in the radial direction.

That is, in the embodiment shown in Figs. 1 to 7, the long groove 38 as means for supplying a mist is formed on the inner circumferential surface of the sleeve 16 in such a manner as to be extending in the axial direction, while in the embodiment of Fig. 8, the long perforation 52 for mist supply is perforated axially on the sleeve 16 at its thick section, and in the embodiment of Fig. 9, the long groove 38 is formed in such a manner as to be extending in the axial direction on the outer circumferential surface of the sleeve 16.

### Effect of the Invention

As has been described hereinbefore, according to a mist supply mechanism for a rotary tool of the invention, smooth supply of mist to the rotary tool during rotation can be achieved without using a rotating shaft for mist supply to which a rotary tool such as a circular saw is attached. That is, the mechanism is not aimed to provide a mist supply port around the rotating shaft, but aimed to provide a mist supply port on a sleeve circumferentially engaged with the rotating shaft, so that cooling/lubricating function can be easily added to a rotating shaft in the already installed machining device. Moreover, even in various commercially available rotary tools having an inside diameter not coincident with a diameter of a rotating shaft, an advantageous effect can be achieved that free selection and use of rotary tools are possible.

## Claims

1. A mist supply mechanism for a rotary tool for supplying a mist under pressure to a rotary tool (18) disposed around a rotating shaft (10), and implementing cooling and/or lubricating of the rotary tool (18) during workpiece-machining, wherein
the rotary tool (18) is disposed around an outer circumference of a sleeve (16) with a required length circumferentially engaging the rotating shaft (10); **characterised in that**
a plurality of ring-like spacers (20) are provided around the outer circumference of the sleeve (16) and said rotary tool (18) is located between said ring-like spacers (20);
a plurality of mist supply passages (38) are provided, said plurality of mist supply passages (38) comprising long groove sections formed on an inner surface of the sleeve (16) and extending in an axial direction, and having one end communicating with a rotary seal section (22)
a plurality of mist passage ports (40) are provided axially along and radially perforate the sleeve (16) for providing communication between the circumferential surface of the sleeve (16) and the plurality of mist supply passages (38)
a mist circulation groove (20a) is provided on the ring-like spacers (20), the other end of the plurality of passage ports (40) communicating with the mist circulation groove (20a), so that said mist circulation groove (20a) allows mist supplied from the plurality of passage ports (40) to flow to the rotary tool (18); and
the mist supplied from a mist supply source to the rotary seal section (22) is supplied to the rotary tool (18) through the plurality of mist supply passages (38), the plurality of passage ports (40) and the mist circulation groove (20a).

2. The mist supply mechanism for a rotary tool according to Claim 1, wherein the plurality of mist supply passages (38), instead of being formed on an inner surface of the sleeve (16), are long groove sections which are concaved on the outer surface of the sleeve (16) and extend in the axial direction.

3. The mist supply mechanism for a rotary tool according to Claim 1, wherein the plurality of mist supply passages (38, 52), instead of being formed on an inner surface of the sleeve (16), are tubular passages which are perforated at the cylindrical thick section of the sleeve (16) and extend in the axial direction.

4. The mist supply mechanism for a rotary tool according to Claim 3, wherein the mist supply passage (38) consisting of the tubular passage has one end communicating with a mist supply source and the other end being closed as a closed-end section; and
each one end of a plurality of passage ports (40) axially perforated at the cylindrical thick section correspondingly communicates with the mist supply passage (38),

## Patentansprüche

1. Ein Nebelzuführungsmechanismus für ein Drehwerkzeug zur Zuführung eines Nebels unter Druck an ein Drehwerkzeug (18), angeordnet um eine drehende Welle (10) herum, und Kühlung und/ oder Schmierung des Drehwerkzeugs (18) während der Werkstückbearbeitung implementierend, wobei
das Drehwerkzeug (18) um einen Außenumfang einer Hülse (16) angeordnet ist, wobei eine erforderliche Länge umlaufend in die drehenden Welle (10) eingreift,
eine Vielzahl ringähnlicher Abstandsstücke (20) um den Außenumfang der Hülse (16) herum angebracht ist und das Drehwerkzeug (18) sich zwischen den ringähnlichen Abstandsstücken (20) befindet,
eine Vielzahl von Nebelzuführungsdurchgängen (38) bereitgestellt ist, wobei die Vielzahl von Nebelzuführungsdurchgängen (38) lange Rillen-Abschnitte umfasst, welche an einer Innenoberfläche der Hülse (16) geformt sind und sich in eine axiale Richtung erstrecken und ein Ende haben, das mit einem drehenden Dichtungs-Abschnitt (22) im Austausch steht,
eine Vielzahl von Nebeldurchgangsöffnungen (40) axial entlang der Hülse (16) bereitgestellt ist und diese radial durchdringt, um für Austausch zwischen der Umfangsoberfläche der Hülse (16) und der Vielzahl von Nebelzuführungsdurchgängen (38) zu sorgen,
eine Nebel-Zirkulationsnut (20a) an den ringähnlichen Abstandsstücken (20) bereitgestellt ist, wobei das andere Ende der Vielzahl von Durchgangsöffnungen (40) mit der Nebel-Zirkulationsnut (20a) im Austausch steht, so dass die Nebel-Zirkulationsnut (20a) Nebel, der von der Vielzahl von Durchgangsöffnungen (40) zugeführt wird, zum Drehwerkzeug (18) strömen lässt, und
der Nebel, der dem drehenden Dichtungs-Abschnitt (22) von einer Nebelzuführquelle zugeführt wird, dem Drehwerkzeug (18) durch die Vielzahl von Nebelzuführungsdurchgängen (38), die Vielzahl von Durchgangsöffnungen (40) und die Nebel-Zirkulationsnut (20a) zugeführt wird.

2. Der Nebelzuführungsmechanismus für ein Drehwerkzeug gemäß Anspruch 1, wobei die Vielzahl von Nebelzuführungsdurchgängen (38), anstatt an einer Innenoberfläche der Hülse (16) geformt zu sein, lange Rillen-Abschnitte sind, welche an der Außenoberfläche der Hülse (16) konkav ausgebildet sind und sich in die axiale Richtung erstrecken.

3. Der Nebelzuführungsmechanismus für ein Drehwerkzeug gemäß Anspruch 1, wobei die Vielzahl von Nebelzuführungsdurchgängen (38, 52), anstatt an einer Innenoberfläche der Hülse (16) geformt zu sein, rohrförmige Durchgänge sind, welche am zylindrischen dicken Abschnitt der Hülse (16) perforiert sind und sich in die axiale Richtung erstrecken.

4. Der Nebelzuführungsmechanismus für ein Drehwerkzeug gemäß Anspruch 3, wobei der Nebelzuführungsdurchgang (38), der aus dem rohrförmigen Durchgang besteht, ein Ende hat, das mit einer Nebelzuführquelle im Austausch steht, und das andere Ende, das als geschlossener Endabschnitt geschlossen ist, und
jedes Ende einer Vielzahl von Durchgangsöffnungen (40), die am zylindrischen dicken Abschnitt axial perforiert sind, entsprechend mit dem Nebelzuführungsdurchgang (38) im Austausch steht.

## Revendications

1. Mécanisme de fourniture de buée pour un outil rotatif pour délivrer une buée sous pression à un outil rotatif (18) disposé autour d'un arbre rotatif (10), et effectuer le refroidissement et/ou la lubrification de l'outil rotatif (18) pendant l'usinage d'une pièce, dans lequel
l'outil rotatif (18) est disposé autour d'une circonférence extérieure d'une gaine (16) avec une longueur requise venant en prise circonférentiellement avec l'arbre rotatif (10) ;
une pluralité d'éléments d'espacement (20) en forme de bagues sont prévus autour de la circonférence extérieure de la gaine (16) et ledit outil rotatif (18) est situé entre lesdits éléments d'espacement en forme de bagues (20) ;
une pluralité de passages de fourniture de buée (38) sont prévus, ladite pluralité de passages de fourniture de buée (38) comprenant de longues sections de rainure formées sur une surface intérieure de la gaine (16) et s'étendant dans une direction axiale, et ayant une extrémité communiquant avec une section de joint rotative (22) ;
une pluralité d'orifices de passage de buée (40) sont prévus axialement le long de la gaine (16) et perforent radialement la gaine (16) pour réaliser une communication entre la surface circonférentielle de la gaine (16) et la pluralité de passages de fourniture de buée (38) ;
une rainure de circulation de buée (20a) est prévue sur les éléments d'espacement en forme de bague (20), l'autre extrémité de la pluralité d'orifices de passage (40) communiquant avec la rainure de circulation de buée (20a), de sorte que ladite rainure de circulation de buée (20a) permette à la buée fourni à partir de la pluralité d'orifices de passage (40) de circuler vers l'outil rotatif (18) ; et
la buée fournie à partir d'une source d'alimentation en buée à la section de joint rotative (22) est fourni à l'outil rotatif (18) par l'intermédiaire de la pluralité de passages de fourniture de buée (38), de la pluralité d'orifices de passage (40) et de la rainure de circulation de buée (20a).

2. Mécanisme de fourniture de buée pour un outil rotatif selon la revendication 1, dans lequel la pluralité de passages de fourniture de buée (38), au lieu d'être formés sur une surface intérieure de la gaine (16), sont de longues sections de rainure qui sont concaves sur la surface extérieure de la gaine (16) et s'étendent dans la direction axiale.

3. Mécanisme de fourniture de buée pour un outil rotatif selon la revendication 1, dans lequel la pluralité de passages de fourniture de buée (38, 52), au lieu d'être formés sur une surface intérieure de la gaine (16), sont des passages tubulaires qui sont perforés au niveau de la section cylindrique épaisse de la gaine (16) et s'étendent dans la direction axiale.

4. Mécanisme de fourniture de buée pour un outil rotatif selon la revendication 3, dans lequel le passage de fourniture de buée (38) consistant en le passage tubulaire a une extrémité communiquant avec une source d'alimentation en buée et l'autre extrémité fermée en tant que section d'extrémité fermée ; et
chaque extrémité d'une pluralité d'orifices de passage (40) perforés axialement au niveau de la section cylindrique épaisse communique de manière correspondante avec le passage de fourniture de buée (38).
